# EUROPEAN PATENT APPLICATION

(11) **EP 2 270 323 A2**
(43) Date of publication of application: **05.01.2011**
(21) Application number: 10163963.1
(22) Date of filing: 26.05.2010
(51) Int. Cl.: F02C 7/36, F02C 9/18

(54) **Clutched steam turbine low pressure sections and methods therefore**

(30) Priority: 04.06.2009 US 477959
(71) Applicant: General Electric Company, Schenectady, NY 12345 (US)
(72) Inventor: Swintek, Roy Paul, Altamont, NY 12009 (US)
(74) Representative: Gray, Thomas

(57) **Abstract**

Solutions for clutching steam turbine low pressure sections are disclosed. In one embodiment, a system (100) includes: a first low pressure steam turbine (120) including a first shaft (175); a second low pressure steam turbine (130) including a second shaft (185); a clutch (140) for coupling and uncoupling the first shaft (175) and the second shaft (185); a conduit (160) for delivering a working fluid to the first low pressure steam turbine (120) and the second low pressure steam turbine (130); a valve (150) within the conduit (160), the valve (150) having an open position and a closed position, the closed position preventing flow of the working fluid to the second low pressure steam turbine (130); and a controller (145) for operating the clutch (140) and the valve (150), the controller (145) uncoupling the second shaft (185) from the first shaft (175) and closing the valve (150) in response to the first (120) and second low pressure steam turbine (130) attaining a predetermined low part load.

## Description

### BACKGROUND OF THE INVENTION

The subject matter disclosed herein relates to solutions for clutching steam turbine low pressure sections. Specifically, the subject matter disclosed herein relates to using a clutch-valve mechanism to engage and disengage low pressure sections of a steam turbine power generation system.

Steam turbine power systems are designed and built with particular load conditions in mind. Often, these systems are built to handle the peak or near-peak loads of their customers, which may coincide with afternoon hours where the ambient temperature is high (e.g., above 27 degrees Celsius). However, during periods of lower demand, these systems must run at off-peak loads. For example, a steam turbine power system may reduce its output to well below fifty percent of its rated power during the evening hours (e.g., after 9:00 pm local time), when customers require very little electricity. Reducing the output of the steam turbine power system to such levels may cause, among other things, mechanical damage to the steam turbine's components, resulting in more frequent parts replacement and increased costs.

### BRIEF DESCRIPTION OF THE INVENTION

Solutions for clutching steam turbine low pressure sections are disclosed. In one embodiment, a system includes: a first low pressure steam turbine including a first shaft; a second low pressure steam turbine including a second shaft; a clutch for coupling and uncoupling the first shaft and the second shaft; a conduit for delivering a working fluid to the first low pressure steam turbine and the second low pressure steam turbine; a valve within the conduit, the valve having an open position and a closed position, the closed position preventing flow of the working fluid to the second low pressure steam turbine; and a controller for operating the clutch and the valve, the controller uncoupling the second shaft from the first shaft and closing the valve in response to the first and second low pressure steam turbine attaining a predetermined low part load.

A first aspect of the invention provides a steam turbine system comprising: a first low pressure steam turbine including a first shaft; a second low pressure steam turbine including a second shaft; a clutch for coupling and uncoupling the first shaft and the second shaft; a conduit for delivering a working fluid to the first low pressure steam turbine and the second low pressure steam turbine; a valve within the conduit, the valve having an open position and a closed position, the closed position preventing flow of the working fluid to the second low pressure steam turbine; and a controller for operating the clutch and the valve, the controller uncoupling the second shaft from the first shaft and closing the valve in response to the first and second low pressure steam turbine attaining a predetermined low part load.

A second aspect of the invention provides a combined cycle power plant system comprising: a gas turbine operably connected to a first generator; a steam turbine section operably connected to the gas turbine; and a steam turbine system operably connected to the steam turbine section, the steam turbine system including: a first low pressure steam turbine including a first shaft; a second low pressure steam turbine including a second shaft; a clutch for coupling and uncoupling the first shaft and the second shaft; a conduit for delivering a working fluid to the first low pressure steam turbine and the second low pressure steam turbine; a valve within the conduit, the valve having an open position and a closed position, the closed position preventing flow of the working fluid to the second low pressure steam turbine; and a controller for operating the clutch and the valve, the controller uncoupling the second shaft from the first shaft and closing the valve in response to the first and second low pressure steam turbine attaining a predetermined low part load.

A third aspect of the invention provides a method of operating a steam turbine system, the method comprising: uncoupling a second low pressure steam turbine from a first low pressure steam turbine using a clutch, the uncoupling being in response to the first and second low pressure steam turbine attaining a predetermined low part load.

### BRIEF DESCRIPTION OF THE DRAWINGS

There follows a detailed description of embodiments of the invention by way of example only with reference to the accompanying drawings, in which:
FIG. 1 shows a schematic block diagram illustrating a steam turbine system including clutched steam turbine low pressure sections according to embodiments of the invention.
FIG. 2 shows a schematic block diagram illustrating portions of a combined cycle power plant system according to embodiments of the invention.
FIG. 3 shows a steam turbine exhaust loss curve illustrating performance characteristics of clutched steam turbine low pressure sections according to embodiments of the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION OF THE INVENTION

As indicated above, aspects of the invention provide for clutched steam turbine low pressure sections. As used herein, unless otherwise noted, the term "set" means one or more (i.e., at least one) and the phrase "any solution" means any now known or later developed solution.

As is known in the art of steam turbine power systems, the terms "rated power" and "rated mass flow" refer to the total power output and total mass flow, respectively, of one or more devices under certain predefined conditions. Typically, the rated power/mass flow of a steam turbine system is designed for a particular set of conditions, and these designed conditions are set as the 100 percent rated power/mass flow marks. When operating at conditions other than design conditions, the power and mass flow of a steam turbine system may deviate from the 100 percent rated power/mass flow mark. Operating conditions below the 100 percent rated power/mass flow mark may fall into a few categories. One such category, known as "low part load," is characterized by running a steam turbine at or under approximately 25% of its rated power/mass flow. Low part load is a distinct subset of the broad category known as "part load," which is characterized by running a steam turbine at less than 100% of its rated power/mass flow. As used herein, "low part load" refers to a range of loads that may be approximately 5-25% of a rated power/mass flow of a steam turbine system. Low part load conditions may occur at different percentages of rated power/mass flow depending upon a plurality of steam turbine conditions. For example, these conditions may include: the low pressure turbine geometry (e.g., last-stage bucket length), operating conditions (e.g., condenser pressure, temperatures, etc.), operation planning/history (e.g., planned duration of low part loading, previous frequency/duration of low part loading) and maintenance schedules.

Operating a steam turbine system at its low part load may cause accelerated mechanical damage to either or both of a first low pressure steam turbine and a second low pressure steam turbine. In particular, operating low pressure steam turbines at low part loads can cause complications such as windage overheating, aerodynamic flow separation, flow instability, etc. These complications may result in accelerated mechanical damage to low pressure section buckets, shafts, rotors, seals, etc. These complications and the mechanical damages they cause may result in costly steam turbine maintenance, stoppages, catastrophic damage, reduced steam turbine reliability and availability, etc.

While one alternative to running a steam turbine system at low part load is to completely shut down the system, this may cause a variety of other problems. For example, every time a steam turbine power system is shut down, it may not restart as planned, resulting in additional maintenance costs and/or missed power generation opportunities. Even further, the cycle of shutting down and restarting the steam turbine power system causes wear on plant components such as boilers, heat recovery steam generators (HRSGs), conduits/pipes, etc. and system components such as shafts, last stage buckets, rotors, etc. In order to avoid the aforementioned undesirable consequences, clutched steam turbine low pressure sections are disclosed.

While clutched steam turbine sections have been used in the past, they have aimed at improving the efficiency of steam turbine power generation systems by reducing the exhaust loss of each individual steam turbine. These prior clutched steam turbine sections have attempted to improve efficiency by disengaging one low pressure steam turbine from the system when the steam turbine system runs at approximately 50 percent of its rated power (operating at "part load"). While this approach produces decreased exhaust losses and an increased annulus velocity, it does not address the problems associated with running a steam turbine system at low part load. In particular, the prior approach does not attempt to reduce the mechanical damage inflicted on steam turbine components due to running at low part loads. Further, the prior approach does not attempt to reduce the need for a shut-down and subsequent restart of the steam turbine system during times of low part load.

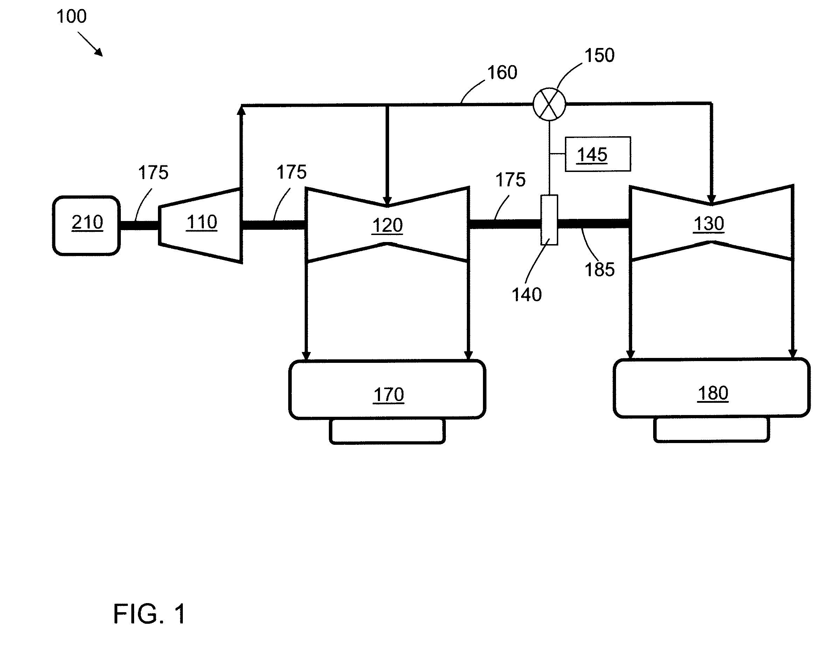

Turning to the drawings, FIG. 1 shows a schematic block diagram of a steam turbine system 100 according to one embodiment of the invention. Arrows are shown depicting the flow of a working fluid between components of steam turbine system 100. The term "working fluid" may refer to any fluid capable of performing the functions described herein.

Steam turbine system 100 may include a first low pressure steam turbine 120 including a first shaft 175, along with a second low pressure steam turbine 130 including a second shaft 185. Steam turbine system 100 may also include a clutch 140 for coupling and uncoupling first shaft 175 and second shaft 185. Clutch 140 may function as a mechanical linkage between first shaft 175 and second shaft 185 during operation of steam turbine system 100. This linkage may allow first shaft 175 and second shaft 185 to rotate at approximately the same rate of speed. However, under certain operating conditions, clutch 140 may uncouple second low pressure steam turbine 130 from first low pressure steam turbine 120 by disengaging second shaft 185 from first shaft 175. Steam turbine system 100 may further include a conduit 160 for delivering a working fluid (numbering omitted) to first low pressure steam turbine 120 and second low pressure steam turbine 130. Conduit 160 may be, for example, a duct or a pipe made in part from metal, composite, or a polymer. Also included in steam turbine system 100 may be a valve 150 located within conduit 160. Valve 150 may have an open position and a closed position, where the closed position prevents flow of the working fluid to second low pressure steam turbine 130. Valve 150 may be, for example, a two-way valve. As is known in the art of fluid mechanics, a two-way valve either prevents a portion of the flow of a working fluid through a pathway, or it allows a portion of that flow to pass. Valve 150 may primarily function either in a closed position (total obstruction) or open position (no obstruction), however, valve 150 may also function in a partially open position (partial obstruction). Valve 150, may, for example, be a gate valve, a butterfly valve, a globe valve, etc.

Steam turbine system 100 may further include a controller 145 for operating clutch 140 and valve 150. Controller 145 may be mechanically and/or electrically connected to clutch 140 and valve 150 such that controller 145 may actuate clutch 140 and/or valve 150. Controller 145 may instruct clutch 140 to uncouple second shaft 185 from first shaft 175 and/or may instruct valve 150 to close in response to the first low pressure steam turbine 120 and second low pressure steam turbine 130 attaining a predetermined low part load. Controller 145 may be a computerized, mechanical, or electro-mechanical device capable of actuating valve 150 and engaging/disengaging clutch 140. In one embodiment, controller 145 may be a computerized device capable of providing operating instructions to valve 150 and/or clutch 140. In this case, controller 145 may monitor the load of steam turbine system 100 (via monitoring flow rates, temperature, pressure, and working fluid parameters), and provide operating instructions to valve 150 and/or clutch 140. For example, controller 145 may send operating instructions to close valve 150 and disengage clutch 140 under certain operating conditions (e.g., low part load). In this embodiment, valve 150 and clutch 140 may each include electro-mechanical components, capable of receiving operating instructions (electrical signals) from controller 145 and producing mechanical motion (e.g., closing of valve, uncoupling of shafts). In another embodiment, controller 145 may be a mechanical device, capable of use by an operator. In this case, the operator may physically manipulate controller 145 (e.g., by pulling a lever), which may actuate valve 150 and/or clutch 140. For example, the lever of controller 145 may be mechanically linked to valve 150 and clutch 140, such that pulling the lever causes valve 150 and/or clutch 140 to fully actuate (e.g., by sealing off conduit 160 between first and second low pressure steam turbines 120, 130 and/or disengaging second shaft 185). In another embodiment, controller 145 may be an electro-mechanical device, capable of electrically monitoring (e.g., with sensors) parameters indicating that steam turbine system 100 is running at a low part load, and mechanically actuating valve 150 and/or clutch 140. While described in several embodiments herein, controller 145 may operate valve 150 and/or clutch 140 through any conventional means.

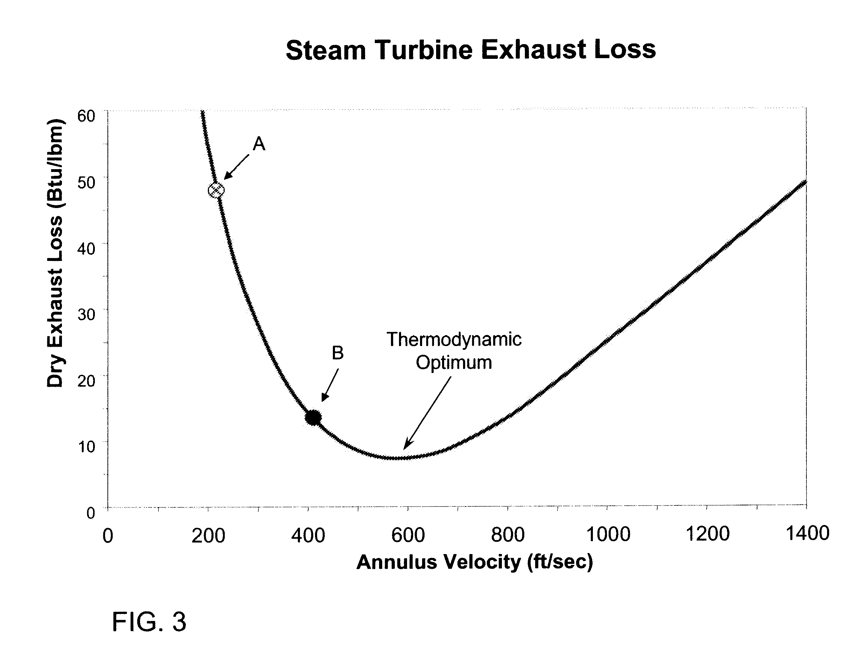

In any case, when controller 145 uncouples second shaft 185 from first shaft 175 and closes valve 150 (preventing working fluid flow), second low pressure steam turbine 130 is effectively taken "off-line." This allows substantially all of the working fluid to flow through first low pressure steam turbine 120, causing increased efficiency in first low pressure steam turbine 120 (shown and described with reference to FIG. 3). This further allows for reduced mechanical damage to both second low pressure steam turbine 130 and first low pressure steam turbine 120. Additionally, first low pressure steam turbine 120 may continue operating even during low loading conditions. This may provide the additional benefit of allowing steam turbine system 100 to operate continuously without a shut-down and restart.

Also shown in FIG. 1 is a steam turbine section 110, which is coupled to first low pressure steam turbine 120 by first shaft 175, and operably connected to first low pressure steam turbine 120 and second low pressure steam turbine 130 via conduit 160. Steam turbine section 110 may, for example, be an intermediate pressure steam turbine, a high pressure steam turbine, or may include both high pressure and intermediate pressure sections. In any case, steam turbine section 110 may provide working fluid (steam exhaust) to one or both of first low pressure steam turbine 120 and second low pressure steam turbine 130. Further shown in FIG. 1 is a generator 210, coupled to first low pressure steam turbine 120 and steam turbine section 110. In one embodiment, generator 210 may be coupled to first low pressure steam turbine 120 by first shaft 175. Generator 210 may be any standard generator capable of converting mechanical energy (rotation of first shaft 175) into electrical energy. It is understood that while generator 210 and steam turbine section 110 are shown as coupled to first low pressure steam turbine 120 by first shaft 175, generator 210 and steam turbine section 110 may be coupled to second shaft 185 when clutch 140 is engaged. However, in conditions of low part load, second low pressure steam turbine 130 does not provide mechanical energy to generator 210.
FIG. 1 further shows a first condenser 170 operably connected to first low pressure steam turbine 120, and a second condenser 180 operably connected to second low pressure steam turbine 130. First condenser 170 and second condenser 180 may be conventional condensers which cool the working fluid exiting first low pressure steam turbine 120 and second low pressure steam turbine 130, respectively.

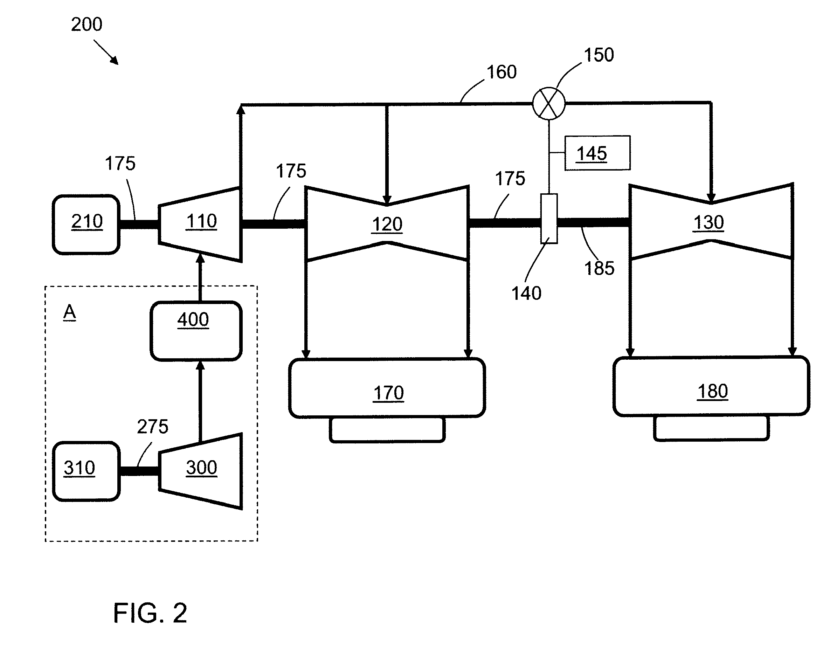

FIG. 2 shows portions of a combined cycle power plant system 200 according to embodiments of the invention. FIG. 2 includes many components shown and described with reference to steam turbine system 100 of FIG. 1. However, combined cycle power plant system 200 may additionally include a gas turbine 300, a first generator 310, and a heat exchanger 400 (additional items shown in dashed box "A"). Gas turbine 300 may be operably connected to first generator 310. Gas turbine 300 may be a conventional gas turbine that generates mechanical energy via the flow of combustion gas through a turbine (components not shown). First generator 310 may be a conventional generator, capable of converting the mechanical energy of gas turbine 300 into electrical energy. First generator 310 may be coupled to gas turbine 300 via a third shaft 275. Further shown in FIG. 2 is heat exchanger 400 operably connected to gas turbine 300 and steam turbine section 110. While heat exchanger 400 is shown as being operably connected to gas turbine 300 and steam turbine section 110, it is understood that heat exchanger 400 may further be operably connected to one or more of conduit 160, first low pressure steam turbine 120 and second low pressure steam turbine 130.

Heat exchanger 400 may supply steam to steam turbine section 110, first low pressure steam turbine 120, and/or second low pressure steam turbine 130, via a conventional conduit, such as those described herein (numbering omitted). Heat exchanger 400 may be a conventional heat recovery steam generator (HRSG), such as those used in a conventional combined-cycle power station. As is known in the art of power generation, heat recovery steam generators may use hot exhaust from gas turbine 300, combined with a water supply, to create steam. This steam may then flow to steam turbine section 110, first low pressure steam turbine 120, and/or second low pressure steam turbine 130 via a conduit (e.g., conduit 160). It is understood that while steam turbine system 100 and combined cycle power plant system 200 are shown and described herein as including two low pressure steam turbines (first 120 and second 130), additional low pressure steam turbines may be included as well. For example, in nuclear or fossil power plants, a third low pressure steam turbine may be coupled to second low pressure steam turbine 130 via shaft 185 or an additional shaft (not shown). In the case where the third low pressure steam turbine shares shaft 185 with second low pressure steam turbine 130, both second (130) and third low pressure steam turbine may be taken "off-line" from first low pressure steam turbine 120. Where an additional shaft is used, the third low pressure steam turbine may be taken "off-line" from second low pressure steam turbine 130. In this case, a second clutch and second valve may couple and operably connect the third low pressure steam turbine to second low pressure steam turbine 130, respectively. Controller 145 may control the second clutch and second valve similarly to clutch 140 and valve 150. However, a second controller may be used to control the second clutch and the second valve. This second controller may function substantially similarly to first controller, and may take any form of controller described herein.

It is further understood that while combined cycle power plant system 200 depicts gas turbine 300 on a different shaft (second shaft 275) than steam turbine section 110 and first low pressure steam turbine 120, these components may all be located on the same shaft (first shaft 175). This configuration is known in the art as a "single-shaft" system. In contrast, FIG. 2 depicts combined cycle power plant system 200 as a "multi-shaft" system. It is understood that clutched steam turbine sections described herein may be used in either a single-shaft system or a multi-shaft system. In a single-shaft configuration, it is understood that gas turbine 400, steam turbine section 110, and first low pressure steam turbine 120 may all be operably connected to first shaft 175. In this case, generator 210 may be the only generator operably connected to first shaft 175. In any case, the locations of generator 210, steam turbine section 110 and first low pressure steam turbine 120 on first shaft 175 may be interchanged. For example, in one embodiment, generator 210 may be located between gas turbine 300 and steam turbine section 110 on first shaft 175.

While FIG. 2 depicts combined cycle power plant system 200 including a single gas turbine 300 and a single heat exchanger 400, it is understood that additional gas turbines, heat exchangers, and generators may be employed. For example, additional sets of components shown in phantom box A may be operably connected to, for example, steam turbine section 110. In this case, steam turbine section 110 may receive steam inputs from a plurality of heat exchangers, resulting in a greater mass flow through steam turbine section 110. Accordingly, steam turbine section 110 must be large enough to process the increased mass flow. This also means that first low pressure steam turbine 120 and second low pressure steam turbine 130 must be large enough to process their respective shares of the increased mass flow. However, where first low pressure steam turbine 120 and second low pressure steam turbine 130 are large enough to process increased mass flow, even greater mechanical damage may occur during times of low part load. For example, during operation of combined cycle power plant system 200 using a plurality of gas turbines, a decrease in demand for power may cause an operator to shut down one or more of the gas turbines. Where this shutdown causes combined cycle power plant system 200 to run at low part load, it may result in mechanical damage to components of first low pressure steam turbine 120 and/or second low pressure steam turbine 130. In such a case, clutched steam turbine sections may provide even greater assistance in reducing mechanical damage within components of combined cycle power plant system 200 than in steam turbine system 100.

Turning to FIG. 3, a steam turbine exhaust loss curve illustrating reduced mechanical damage to steam turbine system 100 is shown. This exhaust curve is well known in the art of steam turbine power systems, and illustrates the thermodynamic optimum point (characterized by minimal dry exhaust loss), at which a steam turbine system is most efficient. Point "A" depicts the performance of steam turbine system 100 at low part load before uncoupling of second shaft 185 (second low pressure steam turbine 130) from first shaft 175 (first low pressure steam turbine 120). As shown, steam turbine system 100 is far from running at its thermodynamic optimum at point A. However, as explained herein, clutched steam turbine sections may reduce mechanical damage to components of steam turbine system 100 by increasing mass flow of the working fluid through first low pressure steam turbine 120. Point "B" depicts steam turbine system 100 after uncoupling of second shaft 185 from first shaft 175. While steam turbine system 100 is still running at low part load at both point A and point B, the mechanical damage to its components may be reduced by taking second low pressure steam turbine 130 "off-line" (uncoupling second shaft 185 and first shaft 175).

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

For completeness, various aspects of the invention are now set out in the following numbered clauses:
1. A steam turbine system comprising:
   a first low pressure steam turbine including a first shaft;
   a second low pressure steam turbine including a second shaft;
   a clutch for coupling and uncoupling the first shaft and the second shaft;
   a conduit for delivering a working fluid to the first low pressure steam turbine and the second low pressure steam turbine;
   a valve within the conduit, the valve having an open position and a closed position, the closed position preventing flow of the working fluid to the second low pressure steam turbine; and
   a controller for operating the clutch and the valve, the controller uncoupling the second shaft from the first shaft via the clutch and closing the valve in response to the first and second low pressure steam turbine attaining a predetermined low part load.
2. The steam turbine system of clause 1, further comprising a steam turbine section coupled to the first low pressure steam turbine by the first shaft.
3. The steam turbine system of clause 2, further comprising a generator coupled to the first low pressure steam turbine and the second low pressure steam turbine.
4. The steam turbine system of clause 3, further comprising a first condenser operably connected to the first low pressure steam turbine.
5. The steam turbine system of clause 4, further comprising a second condenser operably connected to the second low pressure steam turbine.
6. The steam turbine system of clause 1, wherein the controller includes an electro-mechanical device.
7. A combined cycle power plant system comprising:
   a gas turbine operably connected to a first generator;
   a heat exchanger operably connected to the gas turbine;
   a steam turbine section operably connected to the heat exchanger; and
   a steam turbine system operably connected to the steam turbine section, the steam turbine system including:
      a first low pressure steam turbine including a first shaft;
      a second low pressure steam turbine including a second shaft;
      a clutch for coupling and uncoupling the first shaft and the second shaft;
      a conduit for delivering a working fluid to the first low pressure steam turbine and the second low pressure steam turbine;
      a valve within the conduit, the valve having an open position and a closed position, the closed position preventing flow of the working fluid to the second low pressure steam turbine; and
      a controller for operating the clutch and the valve, the controller uncoupling the second shaft from the first shaft via the clutch and closing the valve in response to the first and second low pressure steam turbine attaining a predetermined low part load.
8. The combined cycle power plant system of clause 7, further comprising a second generator operably connected to the steam turbine system.
9. The combined cycle power plant system of clause 8, wherein the second generator is coupled to the first low pressure steam turbine.
10. The combined cycle power plant system of clause 7, further comprising a first condenser operably connected to the first low pressure steam turbine.
11. The steam turbine system of clause 10, further comprising a second condenser operably connected to the second low pressure steam turbine.
12. The steam turbine system of clause 7, wherein the controller includes an electro-mechanical device.
13. A method of operating a steam turbine system, the method comprising:
   uncoupling a second low pressure steam turbine from a first low pressure steam turbine using a clutch, the uncoupling being in response to the first and second low pressure steam turbine attaining a predetermined low part load.
14. The method of clause 13, wherein the first low pressure steam turbine includes a first shaft and the second low pressure turbine includes a second shaft, and wherein the first shaft and the second shaft are capable of coupling and uncoupling via a clutch.
15. The method of clause 13, further comprising:
   preventing flow of a working fluid to the second low pressure steam turbine using a valve, the preventing being in response to the first and second low pressure steam turbine attaining a predetermined low part load.
16. The method of clause 15, further comprising performing the preventing and the uncoupling substantially simultaneously.
17. The method of clause 15, further comprising controlling the preventing and the uncoupling using a controller.
18. The method of clause 17, wherein the controller includes an electro-mechanical device.

## Claims

1. A steam turbine system (100) comprising:
a first low pressure steam turbine (120) including a first shaft (175);
a second low pressure steam turbine (130) including a second shaft (185);
a clutch (140) for coupling and uncoupling the first shaft (175) and the second shaft (185);
a conduit (160) for delivering a working fluid to the first low pressure steam turbine (120) and the second low pressure steam turbine (130);
a valve (150) within the conduit (160), the valve (150) having an open position and a closed position, the closed position preventing flow of the working fluid to the second low pressure steam turbine (120); and
a controller (145) for operating the clutch (140) and the valve (150), the controller (145) uncoupling the second shaft (185) from the first shaft (175) via the clutch (140) and closing the valve (150) in response to the first (120) and second low pressure steam turbine (130) attaining a predetermined low part load.

2. The steam turbine system (100) of claim 1, further comprising a steam turbine section (110) coupled to the first low pressure steam turbine (120) by the first shaft (175).

3. The steam turbine system (100) of claim 2, further comprising a generator (210) coupled to the first low pressure steam turbine (120) and the second low pressure steam turbine (130).

4. The steam turbine system (100) of any of the preceding claims, wherein the controller (145) includes an electro-mechanical device.

5. A combined cycle power plant system (200) comprising:
a gas turbine (300) operably connected to a first generator (310);
a heat exchanger (400) operably connected to the gas turbine (300);
a steam turbine section (110) operably connected to the heat exchanger (400); and
a steam turbine system (100) operably connected to the steam turbine section (110),
the steam turbine system (100) including:
a first low pressure steam turbine (120) including a first shaft (175);
a second low pressure steam turbine (130) including a second shaft (185);
a clutch (140) for coupling and uncoupling the first shaft (175) and the second shaft (185);
a conduit (160) for delivering a working fluid to the first low pressure steam turbine (120) and the second low pressure steam turbine (130);
a valve (150) within the conduit (160), the valve (150) having an open position and a closed position, the closed position preventing flow of the working fluid to the second low pressure steam turbine (120); and
a controller (145) for operating the clutch (140) and the valve (150), the controller (145) uncoupling the second shaft (185) from the first shaft (175) via the clutch (140) and closing the valve (150) in response to the first (120) and second low pressure steam turbine (130) attaining a predetermined low part load.

6. The combined cycle power plant system (200) of claim 5, further comprising a second generator (210) operably connected to the steam turbine system (100).

7. The steam turbine system (100) of claim 5 or 6, wherein the controller (145) includes an electro-mechanical device.

8. A method of operating a steam turbine system (100), the method comprising:
uncoupling a second low pressure steam turbine (130) from a first low pressure steam turbine (120) using a clutch (140), the uncoupling being in response to the first (120) and second low pressure steam turbine (130) attaining a predetermined low part load.

9. The method of claim 8, wherein the first low pressure steam turbine (120) includes a first shaft (175) and the second low pressure turbine (130) includes a second shaft (185), and wherein the first shaft (175) and the second shaft (185) are capable of coupling and uncoupling via a clutch (140).

10. The method of claim 8 or 9, further comprising:
preventing flow of a working fluid to the second low pressure steam turbine (130) using a valve (150), the preventing being in response to the first (120) and second low pressure steam turbine (130) attaining a predetermined low part load.

11. The method of claim 10, further comprising performing the preventing and the uncoupling substantially simultaneously.

12. The method of claim 10 or 11, further comprising controlling the preventing and the uncoupling using a controller.

13. The method of any of claims 8 to 12, wherein the controller includes an electro-mechanical device.
